# EUROPÄISCHE PATENTSCHRIFT

(11) **EP 0 707 946 B1**
(45) Veröffentlichungstag und Bekanntmachung des Hinweises auf die Patenterteilung: **30.12.1998**
(21) Anmeldenummer: 95115006.9
(22) Anmeldetag: 23.09.1995
(51) Int. Cl.: B31F 1/28

(54) **Heizvorrichtung für eine Wellpappe Anlage**
Heating device for a paper corrugating system
Dispositif de chauffage pour un appareil pour la fabrication de carton ondulé

(30) Priorität: 18.10.1994 DE 4437159
(43) Veröffentlichungstag der Anmeldung: 24.04.1996
(73) Patentinhaber: BHS CORRUGATED MASCHINEN- UND ANLAGENBAU GmbH, 92729 Weiherhammer (DE)
(72) Erfinder: Titz, Felix, D-92729 Weiherhammer (DE); Frischholz, Gerald, D-92637 Wieden (DE)
(74) Vertreter: Rau, Manfred, Dr. Dipl.-Ing.

(56) Entgegenhaltungen:
- EP-A- 0 566 842
- EP-A- 0 568 785
- DE-A- 2 213 745
- DE-A- 4 230 015
- FR-A- 2 056 466
- GB-A- 1 554 992
- US-A- 3 861 057
- US-A- 4 304 178
- US-A- 4 659 304
- US-A- 5 183 525

## Beschreibung

Die Erfindung betrifft eine Heizvorrichtung für eine Wellpappe-Anlage nach dem Oberbegriff des Anspruches 1.

Derartige bekannte Heizvorrichtungen weisen sehr dicke Heizplatten auf, deren Oberseite die Heizfläche bildet, wobei in den Heizplatten Heizkanäle zur Durchführung von Heizdampf ausgebildet sind. Damit diese Heizplatten eine ebene Heizfläche als Auflage für die zu erzeugende Wellepappebahn aufweisen, müssen sie außerordentlich dick, beispielsweise 150 mm dick sein. Diese aus massivem Guß oder einer Stahlkonstruktion bestehenden Heizplatten erfordern einen hohen Materialeinsatz. Dies führt zu einer hohen Wärmespeicherung in der Heizplatte, so daß diese sehr träge auf Wärmebedarfsänderungen bei Geschwindigkeitsschwankungen und Qualitätswechseln reagiert. Da der Wärmebedarf nicht angepaßt werden kann, kommt es zu nicht korrekt verklebter Wellpappe, zu gekrümmter Wellpappe, zur Geschwindigkeitseinschränkungen und zu Qualitätsverschlechterungen, d.h. zu Produktionseinschränkungen und Ausschuß.

Aus der DE-AS 2 213 745 ist bereits eine Heizplatte für eine Heizvorrichtung der gattungsgemäßen Art bekannt, bei der einer Verkrümmung der Heizplatte durch Temperaturdifferenzen dadurch entgegengewirkt wird, daß an den vier Eckpunkten der Heizfläche auf Zug beanspruchbare Stützglieder und im übrigen Randbereich der Heizplatte auf Druck beanspruchbare Stützglieder vorgesehen sind. Die in den Eckbereichen angeordneten Stützglieder sollen ein Hochbiegen der Heizplatte verhindern, während die übrigen auf Druck beanspruchbaren Stützglieder einem Durchbiegen der Heizplatte nach innen entgegenwirken.

Aus der DE 42 15 086 A1 ist es bekannt, bei einer Heizvorrichtung für eine Wellpappe-Anlage die Heizplatten mittels einer Befestigungsvorrichtung so zu befestigen, daß sie für eine ebene horizontale Heizfläche einstellbar sind. Hierzu sind die Heizplatten in einem formsteifen und raumfesten Rahmen befestigt. Weiterhin sind die Heizplattenenden über Loslager abgestützt.

Der Erfindung liegt die Aufgabe zugrunde, eine Heizvorrichtung der gattungsgemäßen Art so auszugestalten, daß einerseits ein thermisch bedingter Verzug der Heizplatten zumindest weitgehend ausgeschlossen ist, andererseits aber schnelle Änderungen der von der Heizfläche zu übertragenden Wärmemengen möglich sind.

Diese Aufgabe wird erfindungsgemäß durch die Merkmale im Kennzeichnungsteil des Anspruches 1 gelöst. Das Grundprinzip des erfindungsgemäß ausgestalteten Heizkörpers besteht darin, daß die zwei Funktionen eines Heizkörpers, nämlich Wärmeübertragung und Stabilität, thermisch voneinander getrennt werden. Die Heizplatte wird sehr dünn ausgebildet und hat demzufolge ein entsprechend geringes Wärmespeichervermögen. Änderungen des an der Heizfläche auftretenden Wärmebedarfs können also sehr schnell ausgeregelt werden, da die Heizplatte selber thermisch nicht träge ist. Die von der Heizplatte gesonderte Tragkonstruktion wird von der Heizplatte her thermisch nicht belastet.

Insbesondere durch die Weiterbildung nach Anspruch 2 wird erreicht, daß auf beiden Seiten der Heizplatte, nämlich an der Heizfläche und an der Unterseite der Heizplatte etwa thermisch gleiche Verhältnisse herrschen, so daß auch von da her ein Verzug der Heizplatte auszuschließen ist.

Anspruch 3 gibt einen Bereich der erforderlichen Dicke der Heizplatte an. Die Ansprüche 4 und 5 geben Möglichkeiten wieder, wie die Heizeinrichtungen in die Heizplatte integriert bzw. mit dieser verbunden werden können.

Anspruch 6 gibt einen Abstands-Bereich zwischen Heizplatte und Tragkonstruktion wieder.

Weitere Merkmale, Einzelheiten und Vorteile der Erfindung ergeben sich aus der nachfolgenden Beschreibung von Ausführungsbeispielen anhand der Zeichnung. Es zeigt
- Fig. 1: eine Heizvorrichtung für eine Wellpappe-Anlage in einer schematischen Seiten-Längs-Ansicht,
- Fig. 2: einen Heizkörper für die Heizvorrichtung nach Fig. 1 in gegenüber Fig. 1 vergrößerter Darstellung im vertikalen Längs-Schnitt und
- Fig. 3: eine gegenüber Fig. 2 abgewandelte Ausführungsform eines Heizkörpers für eine Heizvorrichtung.

Die in der Zeichnung dargestellte Heizvorrichtung für Wellpappe-Bahnen wird in einer Anlage zur Herstellung von Wellpappe eingesetzt. Sie weist ein Gestell 1 auf, in dem in Durchlaufrichtung 2, also etwa horizontal, hintereinander Heizkörper 3, die nachfolgend noch genauer beschrieben werden, auf einer Unterkonstruktion 4 angeordnet und abgestützt sind. Die Heizkörper 3 bilden mit ihrer Oberseite eine ebene, glatte Heizfläche 5. Die Heizkörper 3 können quer zur Durchlaufrichtung 2 unterteilt sein.

Oberhalb der Heizfläche 5 ist ein endloses Transportband 6 angeordnet, das über eine von einem Motor 7 angetriebene Antriebstrommel 8 geführt ist, die am - bezogen auf die Durchlaufrichtung 2 - hinteren Ende des Gestells 1 gelagert ist. Das Transportband 6 ist weiterhin über eine nicht angetriebene Umlenktrommel 9 geführt, die am - bezogen auf die Durchlaufrichtung 2 - vorderen Ende des Gestells 1 gelagert ist. Das Untertrum 10 des Transportbandes 6 ist - bezogen auf die Durchlaufrichtung 2 - von der Umlenktrommel 9 zur Antriebstrommel 8 geführt und läuft oberhalb der Heizkörper 3 an deren Heizfläche 5 entlang. Das Obertrum 11 des Transportbandes 6 ist - entgegen der Durchlaufrichtung 2 - über eine einen großen Umschlingungswinkel an der Antriebstrommel 8 bewirkende Umlenkrolle 12, eine Band-Spann-Einrichtung 13 und Leitrollen 14 von der Antriebstrommel 8 zur Umlenktrommel 9 geführt.

Oberhalb des Untertrums 10, also zwischen diesem und dem Obertrum 11 des Transportbandes 6, sind Andrück-Einrichtungen 15 vorgesehen, mittels derer das Untertrum 10 in Richtung zur Heizfläche 5 der Heizkörper 3 gedrückt werden kann. Diese Andrückvorrichtungen 15 können in bekannter Weise ausgestaltet sein, beispielsweise als heb- und senkbare Andrückwalzen oder aber als pneumatisch beaufschlagbare Druckhauben.

An dem - bezogen auf die Durchlaufrichtung 2 - vorn liegenden Ende des Gestells 1, also dem Einführende 16, sind Umlenkrollen 17, 18 gelagert. Über die obere Umlenkrolle 17 wird eine einseitige Wellpappebahn 19 zugeführt, deren glatte Deckbahn 20 zur Anlage gegen das Untertrum 10 des Transportbandes 6 kommt, während ihre gewellte Bahn 21, die mit der Deckbahn 20 bereits verleimt ist, unterhalb der Deckbahn 20, also der Heizfläche 5 zugewandt, angeordnet ist. Über die untere Umlenkrolle 18 wird eine Deckbahn 22 eingeführt, die unterhalb der gewellten Bahn 21 der einseitigen Wellpappebahn 19 direkt auf die Heizfläche 5 läuft. Die jeweils nach unten gerichteten Köpfe 23 der gewellten Bahn 21 der einseitigen Wellpappebahn 19 sind in einem vorherigen Arbeitsgang in üblicher Weise beleimt worden. Die einseitige Wellpappebahn 19 und die Deckbahn 22 werden zwischen der Heizfläche 5 und dem Untertrum 10 des Transportbandes 6 unter Einfluß der Andrückvorrichtungen 15 zusammengedrückt, und zwar gegen die Heizfläche 5. Da das Untertrum 10 des Transportbandes 6 in Durchlaufrichtung 2 angetrieben wird, liegt die Deckbahn 20 fest, also ohne Relativbewegung, d.h. ohne zu rutschen, an dem Untertrum 10 an und läuft mit diesem durch die Heizvorrichtung. Die Deckbahn 22 gleitet an der Heizfläche 5 entlang. Unter dem Einfluß der Wärme der Heizkörper 3 und unter dem leichten Druck, der vom Untertrum 10 auf die einseitige Wellpappebahn 19 und die Deckbahn 22 in Richtung zur Heizfläche 5 ausgeübt wird, härtet der Leim an den Köpfen 23 der gewellten Bahn 21 aus, wodurch die gewellte Bahn 21 der einseitigen Wellpappebahn 19 mit der Deckbahn 22 verbunden wird. Am Auslaufende 24, also im Bereich der Antriebstrommel 8, verläßt eine doppelseitige Wellpappebahn 25 die Heizvorrichtung.

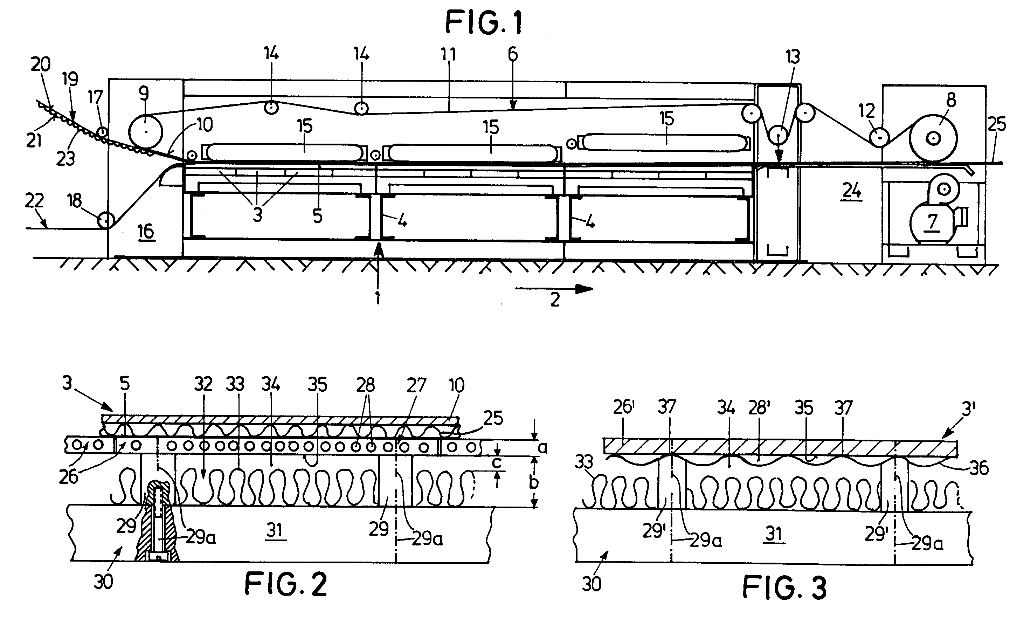

Der Aufbau der Heizkörper 3 ist in Fig. 2 dargestellt. Sie weisen jeweils eine relativ dünne Heizplatte 26 auf, wobei diese nebeneinander angeordneten Heizplatten 26 der Heizkörper 3 die Heizfläche 5 bilden. Diese Heizplatten 26 weisen Heizeinrichtungen 27 auf, die - im Ausführungsbeispiel nach Fig. 2 - durch gebohrte Heizmittel-Kanäle 28, regelmäßig zur Führung von Dampf, ausgebildet sind. Die Dicke a dieser Heizplatte 26 liegt im Bereich von 20 bis 50 mm.

Die Heizplatten 26 sind über Stützen 29 auf einer Tragkonstruktion 30 abgestützt. Die Tragkonstruktion 30 kann so ausgestaltet sein, daß mehrere Heizplatten 26 auf einer Tragkonstruktion 30 abgestützt sind, wie in Fig. 1 angedeutet ist. Die Tragkonstruktion 30 besteht im wesentlichen aus einer schweren Platte 31, die aus einem Material mit geringer Wärmeleitfähigkeit und geringem Temperaturausdehnungskoeffizienten besteht. Sie kann z.B. aus Beton oder einem faserverstärkten Werkstoff gebildet sein. Die Stützen 29 selber bestehen auch aus einem Material geringer Wärmeleitfähigkeit, beispielsweise glasfaserverstärktem Kunststoff, oder sind als Verbundkörper mit hoher Isolierwirkung aufgebaut. Sie können also vollständig aus isolierendem, druckstabilem Kunststoff oder aber auch aus Metall mit einer Isolierplatte, beispielsweise aus glasfaserverstärktem Kunststoff, gebildet sein. Sie sind mit den Heizplatten 26 einerseits und der Tragkonstruktion 30 andererseits mitttels einer thermisch getrennten Schraubverbindung 29a verbunden, die Wärmeausdehnungen der Heizplatten 26 zuläßt.

Der Abstand b zwischen der Heizplatte 26 und der Tragkonstruktion 30 beträgt ein Mehrfaches der Dicke a der Heizplatte 26, beispielsweise 150 bis 250 mm. In dem Raum 32 zwischen der Heizplatte 26 und der Tragkonstruktion 30 ist auf der Tragkonstruktion 30 eine Wärmedämm-Schicht 33 aus Dämm-Material mit einem hohen K-Wert, also mit geringer Wärmeleitfähigkeit, angeordnet. Zwischen dieser Wärmedämm-Schicht 33 und der Heizplatte 26 ist ein Luftspalt 34 ausgebildet, dessen Höhe c etwa der Dicke a der Heizplatte 26 entspricht. Dieser Luftspalt 34 bewirkt, daß sich auch an der der Heizfläche 5 abgewandten Unterseite 35 der Heizplatte 26 etwa die gleiche Temperatur wie in der Heizfläche 5 einstellt, wodurch jedes thermisch bedingte Verziehen der Heizplatte 26 unterbunden wird.

In Fig. 3 ist eine abgewandelte Ausführungsform eines Heizkörpers 3' dargestellt, bei dem die Heizplatte 26' selber aus einer glatten massiven Stahlplatte besteht, an deren Unterseite 35 durch ein entsprechend profiliertes Blech 36 Heizmittel-Kanäle 28' gebildet sind. Das profilierte Blech 36 kann durch Punktschweißung oder Linienschweißen 37 jeweils mit der Unterseite 35 der Heizplatte 26' verbunden sein. Die Ausgestaltung der Stützen 29' und der Tragkonstruktion 30 und der Wärmedämm-Schicht 33 entspricht derjenigen bei dem Ausführungsbeispiel nach Fig. 2.

## Patentansprüche

1. Heizvorrichtung für eine Wellpappe-Anlage
- mit Heizkörpern (3, 3') mit einer durchgehenden, sich in Durchlaufrichtung (2) von mindestens zwei miteinander zu verklebenden Bahnen (19, 22) erstreckenden Heizfläche (5),
- mit einem endlosen, antreibbaren Transportband (6), zwischen dessen Untertrum (10) und der Heizfläche (5) die miteinander zu verklebenden Bahnen (19, 22) aufgenommen werden, und
- mit mindestens einer Andrückvorrichtung (15) zum Belasten des Untertrums (10) in Richtung zur Heizfläche (5),
dadurch gekennzeichnet, daß
die Heizkörper (3, 3') aus einer verhältnismäßig dünnen Heizplatte (26, 26') und einer im Abstand (b) und unterhalb von dieser angeordneten Tragkonstruktion (30) bestehen, wobei die Heizplatte (26, 26') jeweils mittels thermisch isolierender Stützen (29, 29') auf der Tragkonstruktion (30) abgestützt ist und wobei zwischen der jeweiligen Heizplatte (26, 26') und der Tragkonstruktion (30) eine Wärmedämm-Schicht (33) angeordnet ist.

2. Heizvorrichtung nach Anspruch 1, dadurch gekennzeichnet, daß zwischen der Heizplatte (26, 26') und der Wärmedämm-Schicht (33) ein Luftspalt (34) ausgebildet ist.

3. Heizvorrichtung nach Anspruch 1 oder 2, dadurch gekennzeichnet, daß für die Dicke (a) der Heizplatte (26) gilt: 20 mm ≤ a ≤ 50 mm.

4. Heizvorrichtung nach einem der Ansprüche 1 bis 3, dadurch gekennzeichnet, daß Heizmittel-Kanäle (28) in der Heizplatte (26) ausgebildet sind.

5. Heizvorrichtung nach einem der Ansprüche 1 bis 3, dadurch gekennzeichnet, daß Heizmittel-Kanäle (28') an der der Heizfläche (5) abgewandten Seite (Unterseite 35) der Heizplatte (26') ausgebildet sind.

6. Heizvorrichtung nach einem der Ansprüche 1 bis 5, dadurch gekennzeichnet, daß für den Abstand (b) der Heizplatte (26, 26') von der Tragkonstruktion (30) gilt: 150 mm ≤ b ≤ 250 mm.

7. Heizvorrichtung nach Anspruch 2, dadurch gekennzeichnet, daß für die Höhe (c) des Luftspaltes (34) gilt: 20 mm ≤ c ≤ 50 mm.

8. Heizvorrichtung nach einem der Ansprüche 1 bis 7, dadurch gekennzeichnet, daß auf einer Tragkonstruktion (30) mehrere Heizplatten (26, 26') abgestützt sind.

9. Heizvorrichtung nach einem der Ansprüche 1 bis 8, dadurch gekennzeichnet, daß die Tragkonstruktion (30) im wesentlichen durch eine im Vergleich zur Dicke (a) der Heizplatte (26, 26') dicke Platte (31) gebildet ist.

10. Heizvorrichtung nach einem der Ansprüche 1 bis 9, dadurch gekennzeichnet, daß die Tragkonstruktion (30) aus Material mit geringer Wärmeleitfähigkeit und/oder geringem Temperaturausdehnungskoeffizienten besteht.

11. Heizvorrichtung nach einem der Ansprüche 1 bis 10, dadurch gekennzeichnet, daß die Stützen (29) aus Material mit geringer Wärmeleitfähigkeit und/oder geringem Temperaturausdehnungskoeffizienten bestehen.

## Claims

1. A heating unit for a corrugated-board manufacturing plant, comprising
- heating elements (3, 3') having a continuous heating surface (5) extending in the direction of passage (2) of at least two webs (19, 22) to be glued to each other,
- a drivable continuous conveyor belt (6), between the lower strand (10) of which and the heating surface (5) the webs to be glued to each other are accommodated, and
- at least one pressing device (15) for charging the lower strand (10) in the direction towards the heating surface (5),
characterized in that
the heating elements (3, 3') comprise a comparatively thin heating plate (26, 26') and a supporting structure (30) disposed at a distance (b) from, and below, the latter, the heating plate (26, 26') being supported on the supporting structure (30) by thermally insulating props (29, 29'), and a heat insulation layer (33) being disposed between the respective heating plate (26, 26') and the supporting structure (30).

2. A heating unit according to claim 1, characterized in that an air gap (34) is provided between the heating plate (26, 26') and the heat insulation layer (33).

3. A heating unit according to claim 1 or 2, characterized in that 20 mm ≤ a ≤ 50 mm applies to the thickness (a) of the heating plate (26).

4. A heating unit according to one of claims 1 to 3, characterized in that heating agent conduits (28) are provided in the heating plate (26).

5. A heating unit according to one of claims 1 to 3, characterized in that heating agent conduits (28') are provided on the side (lower side 35) of the heating plate (26') turned away from the heating surface (5).

6. A heating unit according to one of claims 1 to 5, characterized in that 150 mm ≤ b ≤ 250 mm applies to the distance (b) of the heating plate (26, 26') from the supporting structure (30).

7. A heating unit according to claim 2, characterized in that 20 mm ≤ c ≤ 50 mm applies to the height (c) of the air gap (34).

8. A heating unit according to one of claims 1 to 7, characterized in that several heating plates (26, 26') are supported on a supporting structure (30).

9. A heating unit according to one of claims 1 to 8, characterized in that the supporting structure (30) is substantially formed by a slab (31) that is thick as compared to the thickness (a) of the heating plate (26, 26').

10. A heating unit according to one of claims 1 to 9, characterized in that the supporting structure (30) consists of a material of little thermal conductivity and/or a low coefficient of temperature expansion.

11. A heating unit according to one of claims 1 to 10, characterized in that the props (29) consist of a material of little thermal conductivity and/or a low coefficient of temperature expansion.

## Revendications

1. Dispositif de chauffage destiné à une installation de carton ondulé, comportant
- des corps chauffants (3, 3') ayant une surface chauffante (5) continue s'étendant dans le sens du passage (2) d'au moins deux bandes (19, 22) à coller entre elles,
- une bande transporteuse sans fin (6) pouvant être entraînée, entre le brin inférieur (10) de laquelle et la surface chauffante (5) passent les bandes (19, 22) à coller entre elles, et
- au moins un dispositif presseur (15) destiné à appliquer une charge sur le brin inférieur (10) en direction de la surface chauffante (5),
caractérisé en ce que
les corps chauffants (3, 3') sont constitués d'une plaque chauffante (26, 26') relativement mince et d'une structure de support (30) disposée à une distance (b) et au-dessous de cette dernière, la plaque chauffante (26, 26') prenant appui sur la structure de support (30) au moyen de supports (29, 29') thermiquement isolés, et une couche (33) d'isolation thermique étant disposée entre la plaque chauffante (26, 26') respective et la structure de support (30).

2. Dispositif de chauffage selon la revendication 1, caractérisé en ce qu'une fente d'air (34) est pratiquée entre la plaque chauffante (26, 26') et la couche (33) d'isolation thermique.

3. Dispositif de chauffage selon la revendication 1 ou 2, caractérisé en ce que pour l'épaisseur (a) de la plaque chauffante (26) : 20 mm ≤ a ≤ 50 mm sont valables.

4. Dispositif de chauffage selon l'une des revendications 1 à 3, caractérisé en ce que des canaux (28) d'agent de chauffage sont pratiqués dans la plaque chauffante (26).

5. Dispositif de chauffage selon l'une des revendications 1 à 3, caractérisé en ce que des canaux (28') d'agent de chauffage sont pratiqués du côté opposé à la surface chauffante (5) (partie inférieure 35) de la plaque chauffante (26').

6. Dispositif de chauffage selon l'une quelconque des revendications 1 à 5, caractérisé en ce que pour la distance (b) entre la plaque chauffante (26, 26') et la structure de support (30) : 150 mm ≤ b ≤ 250 mm sont valables.

7. Dispositif de chauffage selon la revendication 2, caractérisé en ce que pour la hauteur (c) de la fente d'air (34) : 20 mm ≤ c ≤ 50 mm sont valables.

8. Dispositif de chauffage selon l'une quelconque des revendications 1 à 7, caractérisé en ce que plusieurs plaques chauffantes (26, 26') prennent appui sur une structure de support (30).

9. Dispositif de chauffage selon l'une quelconque des revendications 1 à 8, caractérisé en ce que la structure de support (30) est pour l'essentiel constituée d'une plaque (31) qui est épaisse en comparaison avec l'épaisseur (a) des plaques chauffantes (26, 26').

10. Dispositif de chauffage selon l'une quelconque des revendications 1 à 9, caractérisé en ce que la structure de support (30) est constituée de matériau de faible conductibilité thermique et/ou de faible coefficient de dilatation thermique.

11. Dispositif de chauffage selon l'une quelconque des revendications 1 à 10, caractérisé en ce que les supports (29) sont constitués de matériau de faible conductibilité thermique et/ou de faible coefficient de dilatation thermique.
